# EUROPEAN PATENT APPLICATION

(11) **EP 0 932 152 A2**
(43) Date of publication of application: **28.07.1999**
(21) Application number: 99200024.0
(22) Date of filing: 06.01.1999
(51) Int. Cl.: G11B 17/28

(54) **Disc changer**

(30) Priority: 22.01.1998 GB 9801212
(71) Applicant: Sound Leisure Limited, Leeds LS9 9EW (GB)
(72) Inventor: Black, Alan James, Ledston, Yorkshire (GB)
(74) Representative: Wharton, Peter Robert

(57) **Abstract**

Apparatus for lifting a selected disc from a substantially horizontally disposed storage means (2) in which a number of discs are stored on edge, side by side, and transferring the lifted disc between said storage means and another location, such as the disc player (4), includes a lift arm (6) arranged for controlled movement with respect to said disc storage means, wherein said lift arm includes first disc engaging means (6a) at one side thereof, and second disc engaging means (1,1a) at the opposite side thereof, said second disc engaging means being mounted on said arm for movement relative thereto between an operative position in which the disc is, in use, retained between the two disc engaging means and a stowed position in which the arm without a disc therein is free to travel along the discs in said storage means.

## Description

The present invention relates to apparatus for automatically lifting a selected disc such as a compact disc (CD) from a storage rack and transferring it to for example the disc player, in a disc playing machine such as a CD juke box.

In one currently available apparatus of this type, the disc is lifted from the storage rack by means of a transfer arm which is generally a horseshoe shape, the extremities of the arm being shaped into opposed left and right projections each bearing a groove on which the CD is seated by gravity upon lifting of the CD from the rack. One disadvantage of such a system is that the CD is held fairly loosely in theses grooves, such that should the apparatus receive a knock or sharp blow during the lifting and transporting process, the CD can easily be jolted out of the arm, and the present invention seeks to overcome this disadvantage.

According to one aspect of the present invention there is provided apparatus for lifting a selected disc from a substantially horizontally disposed storage means in which a number of discs are stored on edge, side by side, and transferring the lifted disc between said storage means and another location, such as the disc player, the apparatus including a lift arm arranged for controlled movement with respect to said disc storage means, wherein said lift arm includes first disc engaging means at one side thereof, and second disc engaging means at the opposite side thereof, said second disc engaging means being mounted on said arm for movement relative thereto between an operative position in which the disc is, in use, retained between the two disc engaging means and a stowed position in which the arm without a disc therein is free to travel along the discs in said storage means.

Preferably, said movement of the second disc engaging means between operative and stowed positions is effected upon movement of the lift arm vertically with respect to the disc storage means.

Conveniently, the disc lift member is mounted for controlled movement along a substantially vertically disposed first slide means, said first slide means being mounted for controlled movement along a substantially horizontally disposed second slide means.

Conveniently, said controlled movement of the disc lift member and said first slide means is achieved by means of vertical and horizontal stepper motors, respectively.

Preferably, said controlled movement of the disc lift member and first slide means is under the control of a microprocessor which is programmed to accept a user's selection of one or more discs.

In the preferred embodiment, the disc lift member is generally arcuate in shape, defining an angle of approximately 270 degrees, with one of the free ends of the arc terminating in said first disc retaining means which protrudes inwardly towards a disc to be held within the arcuate lift member and includes a groove therein, the second disc engaging means being mounted on the other side of the arc.

Preferably, the second disc engaging means comprises a gripper arm which is generally elongate in shape having a first end adapted to engage the disc (by means of a groove or equivalent structure), and a second end bearing a cam follower adapted to engage with a cam surface mounted on a fixed part of the apparatus. The gripper arm is pivotally mounted on the lift arm at a position between said two ends, and is constantly urged towards the operative position by means of a spring attached between the gripper arm and an upper region of the lift arm.

In use, when the lift arm has travelled vertically down to its lowermost position with respect to the storage means, the cam follower of the gripper arm is forced by engagement with the corresponding part of said cam surface towards the discs in the storage means, such that the opposite end of the gripper arm is forced in the opposite direction, against the action of the spring, due to pivoting of the gripper arm, such that the second disc engaging means is held in the stowed position to allow the lift arm to travel along the discs in the storage means to the position of the selected disc. Once the lift arm is at the correct position, it starts to travel vertically upwards with respect to the storage means and at the same time the cam follower of the gripper arm follows the cam surface which is shaped so as to cause pivoting of the gripper arm into the operative position, wherein the disc is positively and securely held between the lower end of the gripper arm and the opposite, grooved extremity of the lift arm.

Thus, the stowed position of the lift member is the lowermost position with respect to the first slide means, wherein the first and second disc engaging means are below centre of the discs held in the storage means. The first slide means is then caused to move horizontally along said second slide means, "scanning" the discs in the storage means, until the lift member is directly over the selected disc, with the retaining lugs located below the centre of the disc.

Once in this position, the lift arm is caused to move vertically upwards along said first slide means with the disc firmly retained in the disc lift arm whilst the latter is caused to move towards an uppermost position on said first slide member, whereupon the first slide member is caused to move along said second slide member, carrying the disc above the remaining discs in the storage means, until the selected disc is above the disc player, or other desired location.

The sequence of events just described is then carried out in reverse order, to transfer the selected disc to its required location, and then repeated to return the disc to its original position in the storage means.

According to another aspect of the present invention there is provided a machine for automatically selecting and playing/reading a plurality of discs, the machine including substantially horizontally disposed disc storage means in which a number of discs are stored on edge, side by side, a disc player, a disc lift arm arranged for controlled movement with respect to said disc storage means, wherein said lift arm includes first disc engaging means at one side thereof and second disc engaging means at the opposite side thereof, said second disc engaging means being mounted on said arm for movement relative thereto between an operative position in which the disc is, in use, retained between said first and second disc engaging means, and a stowed position in which the arm without a disc therein is free to travel along the discs in said storage means, and control means for controlling the movement of said disc lift member in response to a predetermined disc selection.

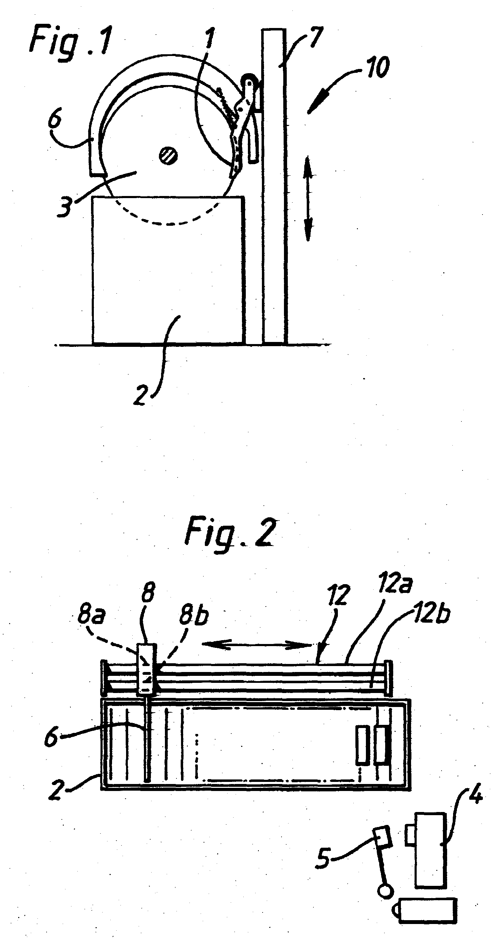

Embodiments of the present invention will now be described, by way of example only, with reference to the accompanying drawings, in which:-
Figure 1 is an end view of part of the apparatus according to the present invention,
Figure 2 is a plan view of the apparatus shown in Figure 1,

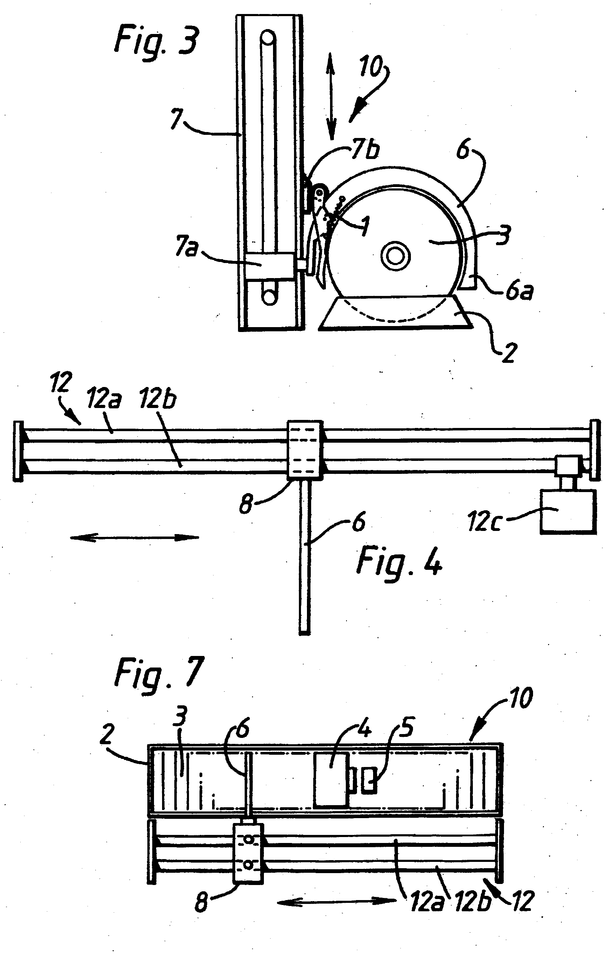

Figure 3 illustrates the first slide means and disc lift member,
Figure 4 illustrates the second slide means and disc lift member,
Figure 5 illustrates the disc lift member in the "down" position with respect to the first slide means,
Figure 6 illustrates the disc lift member in the "up" position with respect to the first slide means,

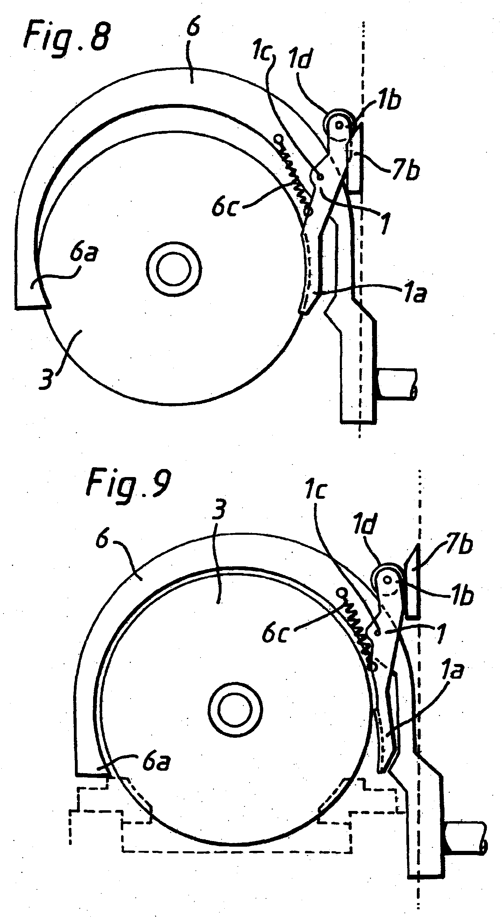

Figure 7 is a schematic plan view of apparatus according to the present invention, and
Figures 8 & 9 illustrate the principle of operation of the gripper arm.

Referring to the drawings, apparatus 10 according to the present invention comprises a horizontally disposed CD storage rack 2 for storage of up to eighty CDs, each CD being held vertically with their lower edge portions being held in individual slots, and an arcuate disc lift arm 6 mounted for controlled sliding movement up and down a first vertically disposed slide means 7. Attached to the base of vertical slide 7 is a coupling block 8 with two holes 8a, 8b therein. The vertical slide 7 is mounted on a second, horizontally disposed slide means 12 which comprises two parallel rods 12a, 12b which pass through holes 8a, 8b in coupling block 8. In the "rest" position, the lift member 6 is in its lowest position at the base of first slide 7, wherein the lift member is able to move up and down the rack of CDs with the disc engaging means being below centre of the CDs held in the rack.

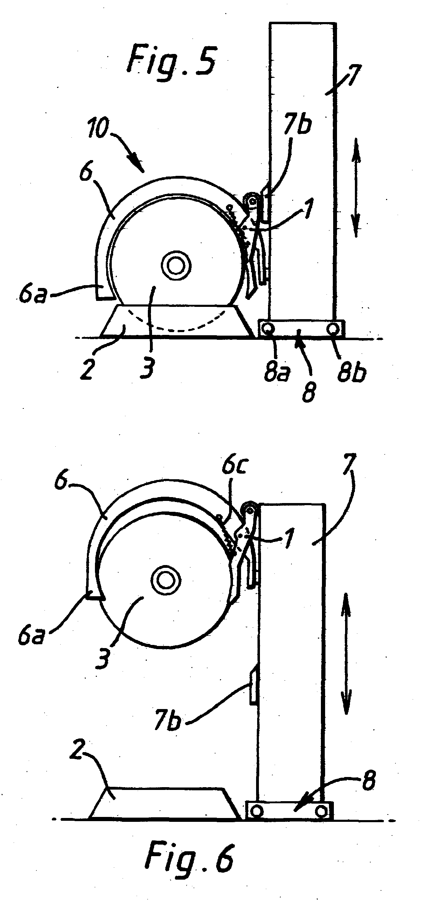

A gripper arm 1 is mounted on the lift arm 6, for pivotal movement about pivot axis 1c. One end 1a of the gripper arm includes second disc engaging means in the form of a groove or similar structure, and the opposite end 1b of the gripper arm includes a cam follower in the form of a pair of rollers 1d which act against a cam surface in the form of a pair of ramps 7b fixed on an immovable part of the apparatus. As can be seen from Figures 5 and 6, as the lift arm travel upwards, the rollers 1d off the ramps 7b, causing the gripper end 1a of gripper arm 1 to be pivoted into engagement with the disc, under the action of the spring 6c which continues to keep the gripper arm 1 in contact with and retaining the disc. Conversely, when the lift arm 6 travels downwardly the rollers 1d ride onto the ramps 7b, causing the end 1a of gripper arm 1 to pivot away from the disc, against the action of spring 6c.

The motion of the disc lift member 6 with respect to the first slide 7 and the motion of the first slide 7 with respect to the second slide 12 are controlled by vertical and horizontal stepping motors 7a, 12c respectively, these stepping motors being under the control of a microprocessor (not shown) which directs the disc lift member to a particular, pre-selected CD.

The lug 6a and the lowermost edge of gripper arm end 1a are positioned such that an imaginary line drawn between them passes below the centre of the CD to be held therein.

As can be seen in Figures 5 and 6, once the lift member 6 is positioned around the edges of the selected CD, having first "scanned" over the CDs in the rack, the lift member is driven up the first slide means 7 by stepping motor 7a, until it reaches the top. During this lift procedure, the CD is securely retained between gripper arm end 1a and lug 6a as hereinbefore described.

Then, first slide means 7 is driven along second slide 12 until the lift member with the selected CD held therein is above the CD player 4 with its associated clamp arm 5, whereupon the lift member is lowered along first slide 7, transferring the CD to the turntable.

The lift member 6 then picks up the CD from the turn table in the same way as previously described, and travels horizontally along the second slide 12 until above the place from which the CD was lifted, then travels vertically down slide 7, returning the CD to its original position.

The procedure is then repeated, as required and as pre-programmed into the microprocessor control unit, giving continuous and automatic operation.

It should be appreciated that the invention is not limited to CDs and CD players, but encompasses within its scope other systems such as vinyl records, optical discs, data discs and the like.

## Claims

1. Apparatus for lifting a selected disc from a substantially horizontally disposed storage means (2) in which a number of discs are stored on edge, side by side, and transferring the lifted disc between said storage means and another location, such as the disc player (4), the apparatus including a lift arm (6) arranged for controlled movement with respect to said disc storage means, wherein said lift arm includes first disc engaging means (6a) at one side thereof, and second disc engaging means (1,1a) at the opposite side thereof, said second disc engaging means being mounted on said arm for movement relative thereto between an operative position in which the disc is, in use, retained between the two disc engaging means and a stowed position in which the arm without a disc therein is free to travel along the discs in said storage means.

2. Apparatus according to Claim 1, wherein said movement of the second disc engaging means (1,1a) between operative and stowed positions is effected upon movement of the lift arm vertically with respect to the disc storage means.

3. Apparatus according to Claim 1 or Claim 2, wherein the disc lift member is mounted for controlled movement along a substantially vertically disposed first slide means (7), said first slide means being mounted for controlled movement along a substantially horizontally disposed second slide means (12).

4. Apparatus according to Claim 3, wherein said controlled movement of the disc lift member and said first slide means is achieved by means of vertical and horizontal stepper motors, respectively (7a, 12c).

5. Apparatus according to Claim 3 or Claim 4, wherein said controlled movement of the disc lift member and first slide means is under the control of a microprocessor which is programmed to accept a user's selection of one or more discs.

6. Apparatus according to any of the preceding Claims, wherein the disc lift member is generally arcuate in shape, defining an angle of approximately 270 degrees, with one of the free ends of the arc terminating in said first disc retaining means (6a) which protrudes inwardly towards a disc to be held within the arcuate lift member and includes a groove therein, the second disc engaging means (1,1a) being mounted on the other side of the arc.

7. Apparatus according to any of the preceding Claims, wherein the second disc engaging means comprises a gripper arm (1) which is generally elongate in shape having a first end (1a) adapted to engage the disc (by means of a groove or equivalent structure), and a second end (1b) bearing a cam follower (1d) adapted to engage with a cam surface (7b) mounted on a fixed part of the apparatus.

8. Apparatus according to Claim 7, wherein the gripper arm (1) is pivotally mounted on the lift arm (6) at a position between said two ends, and is constantly urged towards the operative position by means of a spring (6c) attached between the gripper arm and an upper region of the lift arm.

9. A machine for automatically selecting and playing/reading a plurality of discs, the machine including substantially horizontally disposed disc storage means (2) in which a number of discs (3) are stored on edge, side by side, a disc player (4), a disc lift arm (6) arranged for controlled movement with respect to said disc storage means, wherein said lift arm includes first disc engaging means (6a) at one side thereof and second disc engaging means (1,1a) at the opposite side thereof, said second disc engaging means being mounted on said arm for movement relative thereto between an operative position in which the disc is, in use, retained between said first and second disc engaging means, and a stowed position in which the arm without a disc therein is free to travel along the discs in said storage means, and control means for controlling the movement of said disc lift member in response to a predetermined disc selection.
